Europäisches Patentamt

European Patent Office

Office européen des brevets

(19)

(11) **EP 1 271 066 B1**

(12) **EUROPÄISCHE PATENTSCHRIFT**

| | |
|---|---|
| (45) Veröffentlichungstag und Bekanntmachung des Hinweises auf die Patenterteilung:<br>**13.10.2004 Patentblatt 2004/42** | (51) Int Cl.⁷: **F24F 5/00**, F24F 12/00,<br>F24F 3/14, F24F 11/047 |

(21) Anmeldenummer: **02014574.4**

(22) Anmeldetag: **01.07.2002**

(54) **Raumlufttechnisches Verfahren und raumlufttechnische Anlage**

Method and system for indoor air treatment

Procédé et système de traitement d'air intérieure

(84) Benannte Vertragsstaaten:
**AT BE BG CH CY CZ DE DK EE ES FI FR GB GR
IE IT LI LU MC NL PT SE SK TR**

(30) Priorität: **29.06.2001 LU 90799
25.01.2002 LU 90887**

(43) Veröffentlichungstag der Anmeldung:
**02.01.2003 Patentblatt 2003/01**

(73) Patentinhaber: **PAUL WURTH S.A.
1122 Luxembourg (LU)**

(72) Erfinder: **Haser, Herbert
66763 Dilingen (DE)**

(74) Vertreter: **Schmitt, Armand et al
Office Ernest T. Freylinger S.A.,
B.P. 48
8001 Strassen (LU)**

(56) Entgegenhaltungen:
EP-A- 1 026 450            US-A- 4 926 618
US-A- 5 860 294            US-A- 6 003 327
US-A- 6 050 100

• **PATENT ABSTRACTS OF JAPAN vol. 1999, no.
10, 31. August 1999 (1999-08-31) -& JP 11 132681
A (SEIBU GIKEN CO LTD), 21. Mai 1999
(1999-05-21)**
• **PATENT ABSTRACTS OF JAPAN vol. 009, no.
025 (M-355), 2. Februar 1985 (1985-02-02) -& JP
59 170630 A (FUJITA KOGYO KK), 26. September
1984 (1984-09-26)**
• **PATENT ABSTRACTS OF JAPAN vol. 2000, no.
12, 3. Januar 2001 (2001-01-03) -& JP 2000
240979 A (TAIKISHA LTD), 8. September 2000
(2000-09-08)**

## Beschreibung

Die vorliegende Erfindung betrifft allgemein ein raumlufttechnisches Verfahren (RLT-Verfahren) und eine raumlufttechnische Anlage (RLT-Analge). Sie betrifft insbesondere ein Verfahren zum Aufbereiten von Außenluft in einer RLT-Anlage mit einem Sorptionsrotor als Luftentfeuchter, sowie eine RLT-Anlage zum Umsetzen dieses Verfahrens.

### *Stand der Technik*

RLT-Anlagen übernehmen u.a. die Außenluftversorgung der Nutzräume eines Gebäudes. Im Sommer muss diese Außenluft in der RLT-Anlage nicht nur gekühlt, sondern auch getrocknet werden. Eine Lufttrocknung ist besonders dann erforderlich, falls ein Teil der Kühllast energiesparend durch Kühldecken in den Nutzräumen abgedeckt wird, wie dies besonders in gemäßigten Klimazonenzunehmend der Fall ist. Zu hohe Feuchtwerte der Zuluft können in der Tat zum Kondensatanfall an der Kühldecke, bzw. an den Versorgungsrohren der Kühldecke führen.

In bekannten RLT-Anlagen wird die Entfeuchtung der Außenluft durch Abkühlung der Luft bis zum Taupunkt vorgenommen. Die abgekühlte, getrocknete Luft wird dann anschließend in einem Nacherhitzer wiederum bis zur gewünschten Zulufttemperatur aufgeheizt. Obschon dieses Verfahren vom Funktionsprinzip her eine Energievernichtung impliziert und ebenfalls hohe Betriebskosten verursacht, konnte sich in RLT-Anlagen bis jetzt keine Alternative zur Taupunkt-Entfeuchtung durchsetzen,

Es ist weiterhin anzumerken, dass die hygienischen Anforderungen an RLT-Anlagen immer strenger werden. Eine moderne RLT-Anlage sollte eine saubere und bakteriell unbedenkliche Aufbereitung der Außenluft gewährleisten. In bestehenden Anlagen mit kondensierenden Luftkühlern ist dies nicht immer der Fall, da das im Luftkühler anfallende Kondensat ein idealer Lebensraum für Bakterien ist. Auch aus diesem Grund besteht ein dringender Bedarf für eine Alternative zur Taupunkt-Entfeuchtung.

In der Prozesstechnik werden seit langem sogenannte Sorptionsrotoren als Entfeuchter eingesetzt. Ein solcher Sorptionsrotor umfasst einen luftdurchlässigen Rotor mit einer hydrophilen Oberfläche. Der Prozessluftstrom wird durch einen Entfeuchtungssektor geführt, wobei die hydrophile Oberfläche des Rotors Wassermoleküle aus der Luft absorbiert (bzw. adsorbiert). In einem Regenerationssektor werden die von der hydrophilen Oberfläche des Sorptionsrotors aufgenommen Wassermoleküle durch einen heißen Regenerationsluftstrom wieder verdampft, um anschließend mit der Regenerationsluft in die Atmosphäre abgeführt zu werden.

Neuerdings wurde auch vorgeschlagen einen Sorptionsrotor als Entfeuchter in RLT-Anlagen einzusetzen. RLT-Anlagen mit Sorptionsrotor sind z.B. in den Patentschriften US 6,003,327, US 5,860,284, US 6,050,100, JP 11-132681 und US 6,018,953 beschrieben. Diese R L T-Anlagen funktionieren grundsätzlich nach dem Prinzip, dass ein Außenluftstrom zwecks Entfeuchtung durch den Entfeuchtungssektor des Sorptionsrotors geführt wird, aufgeheizte Außenluft als Regenerationsluft durch den Regenerationssektor des Sorptionsrotors geführt wird und anschließend entsorgt wird, und der im Sorptionsrotor getrocknete und erhitzte Außenluftstrom durch eine Rückkühlanlage geführt wird. Es wurde z.B. vorgeschlagen diese Rückkühlanlage als Plattenwärmetauscher auszubilden, wobei der im Sorptionsrotor getrocknete und erhitzte Hauptstrom primärseitig durch den Plattenwärmetauscher geführt wird und in diesem durch eine sekundärseitige Verdunstung von Wasser gekühlt wird.

Betreffend die Luftführung in solchen RLT-Anlagen ist anzumerken, dass in der Regel ein Hauptventilator den zu behandelnden Außenluftstrom durch den Entfeuchtungssektor saugt, und ein separater Ventilator aufgeheizte Außenluft durch den Regenerationssektor saugt. Aus der vorerwähnten JP 11-132681 ist jedoch ebenfalls bekannt einen einzigen Ventilator stromaufwärts vom Entfeuchtungssektor anzuordnen. Letzterer saugt einen Außenluftstrom an, der dann druckseitig in einen Hauptstrom und einen Nebenstrom aufgeteilt wird. Der Hauptstrom wird zwecks Entfeuchtung durch einen Entfeuchtungssektor des Sorptionsrotors geführt. Der Nebenstrom wird, nach Aufheizen in einem Wärmetauscher und einem Erhitzer, als Regenerationsluft durch einen Regenerationssektor des Sorptionsrotors geführt.

Ein wesentlicher Nachteil der bekannten RLT-Anlagen mit Sorptionsrotor ist, dass der oder die Ventilatoren einen relativ hohen Jahresenergiebedarf aufweisen, da sowohl der Sorptionsrotor als auch der Plattenwärmetauscher relativ hohe Druckverluste erzeugen.

### *Aufgabe der Erfindung*

Aufgabe der vorliegenden Erfindung ist es deshalb in einer RLT-Anlage mit einem Sorptionsrotor als Luftentfeuchter, den durch die Anlage verursachten Jahresenergiebedarf für den Transport der Luft wesentlich zu reduzieren. Diese Aufgabe wird erfindungsgemäß durch ein Verfahren nach Anspruch 1 gelöst. Es wird weiterhin eine RLT-Anlage zum Umsetzen dieses Verfahrens vorgeschlagen.

## Zusammenfassung der Erfindung

In einem erfindungsgemäßen Verfahren zum Aufbereiten Außenluft in einer RLT-Anlage mit einem Sorptionsrotor als Luftentfeuchter, saugt ein Ventilator einen Außenluftstrom an. Dieser Außenluftstrom wird dann druckseitig vom Ventilator in einen Hauptstrom und einen Nebenstrom aufgeteilt. Der Hauptstrom wird zwecks Entfeuchtung durch einen Entfeuchtungssektor des Sorptionsrotors geführt. Der Nebenstrom wird in einem Erhitzer aufgeheizt, bevor er als Regenerationsluft durch einen Regenerationssektor des Sorptionsrotors geführt und anschließend mit der aufgenommen Feuchte entsorgt wird. Der im Sorptionsrotor getrocknete und erhitzte Hauptstrom der Außenluft wird durch eine Rückkühlanlage geführt, in der er rückgekühlt wird. Um den durch die Anlage verursachten Jahresenergiebedarf für den Transport der Luft wesentlich zu reduzieren, wird, in Abhängigkeit dertatsächlich benötigten Entfeuchtungsleistung, der Hauptstrom ganz oder teilweise über einen Bypass mit einem ersten Durchflussregelorgan am Sorptionsrotor vorbeigeleitet, und der Nebenluftstrom mittels einem zweiten Durchflussregelorgan kontinuierlich geregelt. Durch eine Volumenstromregelung des Ventilators wird zudem die Luftmenge im Hauptstrom weitgehend konstant gehalten. Die Luftmengen die durch den Entfeuchtungssektor und den Regenerationssektor des Sorptionsrotors geleitet werden sind bei maximalem Entfeuchtungsbedarf am größten. Bei reduziertem Entfeuchtungsbedarf werden diese Luftmengen entsprechend reduziert, wobei der Hauptstrom dann teilweise oder ganz über den Bypass mit weitaus niedrigerem Druckverlust umgeleitet wird. Die Volumenstromregelung des Ventilators gewährleistet hierbei, dass die Luftmenge im Hauptstrom nicht wesentlich ansteigt. Durch das erfindungsgemäße Verfahren lässt sich der Jahresenergiebedarf des Ventilators besonders in gemäßigten Klimazonen wesentlich reduzieren, da die maximale Entfeuchtungsleistung des Sorptionsrotors nur während relativ wenigen Stunden im Jahr gebraucht wird, und während einem Großteil des Jahres überhaupt keine Entfeuchtung der Außenluft erforderlich ist. Weiterhin ist anzumerken, dass durch die Reduzierung der Regenerationsluftmenge bei reduzierter Entfeuchtungsleistung, auch die für die Regeneration des Sorptionsrotors benötigte Heizenergie reduziert wird.

Durch eine Lufttrocknung mittels Sorptionsrotor lässt sich der Aufwand für ein komfortgerechtes Aufbereiten von feuchtwarmer Außenluft wesentlich reduzieren. Beim Entfeuchten im Entfeuchtungssektor des Sorptionsrotors erhitzt sich der Hauptstrom zwar relativ stark. Bedingt durch die hohen Lufttemperaturen und die geringe Absolutfeuchte des Hauptstroms am Ausgang des Sorptionsrotors erfolgt die erforderliche Rückkühlung energietechnisch jedoch äußerst günstig in der nachgeschalten Rückkühlanlage. Letztere kommt in der Tat ohne einen Niedrigtemperatur-Kältekreislauf aus, so dass diese Rückkühlung der getrockneten Luft nur sehr geringe Betriebskosten verursacht. Da für die Entfeuchtung keine Kälteanlage erforderlich, kann die Leistung der Kälteanlage, die ggf. für eine Nachkühlung erforderlich ist, wesentlich kleiner ausgelegt werden. Es ist folglich auch eine wesentlich geringere elektrische Maximalleistung bereitzustellen, was sich natürlich äußerst günstig auf die Elektrizitätsrechnung auswirkt. Bei einer Lufttrocknung mit Sorptionsrotor sind zudem weitaus geringere Absolutfeuchten als durch Unterkühlung der Luft auf den Taupunkt zu erzielen. Niedrigere Absolutfeuchten gewährleisten ein besseres Raumklima und verschaffen auch eine höhere Sicherheit gegen Kondensatbildung bei einem Einsatz von energiesparenden Kühldecken. Hygienisch ist die Entfeuchtung im Sorptionsrotor der Entfeuchtung in einem kondensierenden Luftkühler ebenfalls weit überlegen. Da der Rotor kontinuierlich getrocknet wird, werden stehendes Kondensat und kontinuierlich feuchte Oberflächen, welche Bakterien und Algen die Möglichkeit geben sich zu vermehren, wirksam vermieden. Die Trocknung des Sorptionsrotors mit heißer sauberer Luft hat zudem eine gewisse keimtötende und säubernde Wirkung.

Der Nebenluftstrom wird vorteilhaft auf eine Temperatur von 60 bis 120°C aufgeheizt. Die warmfeuchte Außenluft im Hauptluftstrom kann sich dann bei der Entfeuchtung im Sorptionsrotor von 6 bis 35 °C aufheizen. Im Normalfall beträgt diese Aufheizung jedoch weniger als 20 °C.

Bedingt durch die hohen Lufttemperaturen und die geringe Absolutfeuchte des Hauptstroms am Ausgang des Sorptionsrotors, kann der Energieaustausch in der Rückkühlanlage bei relativ hohen Temperaturen erfolgen, was den Weg für besonders energiesparende Ausführungen der Rückkühlanlage öffnet. So kann die Rückkühlanlage z.B. einen Plattenwärmetauscher umfassen, wobei der im Sorptionsrotor getrocknete und erhitzte Hauptstrom primärseitig durch den Plattenwärmetauscher geführt wird, und in diesem durch eine sekundärseitige Verdunstung von Wasser gekühlt wird. Das gleiche Funktionsprinzip lässt sich unter Umständen auch mit andern Wärmetauschern umsetzen, wobei der Plattenwärmetauscher jedoch eindeutig den Vorteil einer größeren Austauschfläche aufweist.

Hinter der Rückkühlanlage, die z.B. als Plattenwärmetauscher ausgebildet ist, kann der Hauptstrom dann noch, falls erforderlich, trocken, also ohne weitere Wasserausscheidung, auf die gewünschte Zulufttemperatur nachgekühlt werden, wobei dann auf einen Niedrigtemperatur-Kältekreislauf zurückgegriffen werden kann.

Der Plattenwärmetauscher ist vorteilhaft ein Luft-Luft-Plattenwärmetauscher der primärseitig mit dem getrockneten und erhitzten Hauptstrom und sekundärseitig mit einem Raumabluftstrom beaufschlagt wird. Sekundärseitig weist dieser Plattenwärmetauscher eine hydrophile Tauscheroberfläche auf. Letztere wird mit Wasser benetzt, das nach dem kühlenden Verdampfen auf der sekundärseitigen Oberfläche von dem sekundärseitigen Raumabluftstrom aufgenommen wird. Plattenwärmetauscher dieser Art bringen mit einem relativ kleinen Wasserbedarf eine relativ große Kühlleistung, insbesondere falls ein relativ trockener Abluftstrom zur Verfügung steht der zudem wesentlich kälter als der erhitzte Hauptstrom ist. Dass die Kühlung des trockenen Hauptstroms hierbei trocken, d.h. ohne weitere Wasserausscheidung erfolgt, wirkt sich natürlich ebenfalls günstig auf die sensible Kühlleistung aus.

Im Winter kann der Plattenwärmetauscher, bzw. ein Äquivalent des Plattenwärmetauschers, übrigens ohne Benetzung der sekundärseitigen Oberfläche für eine Wärmerückgewinnung aus dem Abluftstrom eingesetzt werden. Hierdurch wird ohne Mehrinvestitionen ein ausgezeichneter Wärmerückgewinnungskoeffizient erzielt.

Falls in der Übergangszeit weder eine Wärmerückgewinnung noch eine Nachkühlung im Plattenwärmetauscher möglich ist, wird der Hauptstrom vorteilhaft über einen Bypass am Plattenwärmetauscher vorbeigeführt wird. Hierdurch lässt sich ebenfalls Transportenergie für die Luft einsparen.

Die RLT-Anlage weist weiterhin vorteilhaft mindestens einen Wärmetauscher auf, der hinter dem Plattenwärmetauscher in den Hauptstrom geschaltet ist und im Winter dem Nachheizen und im Sommer dem Nachkühlen dient.

### *Figurenaufstellung*

Im folgenden wird nun eine Ausführung der Erfindung anhand der beiliegenden Figur und einer Energiekostenvergleich beschrieben und kommentiert.

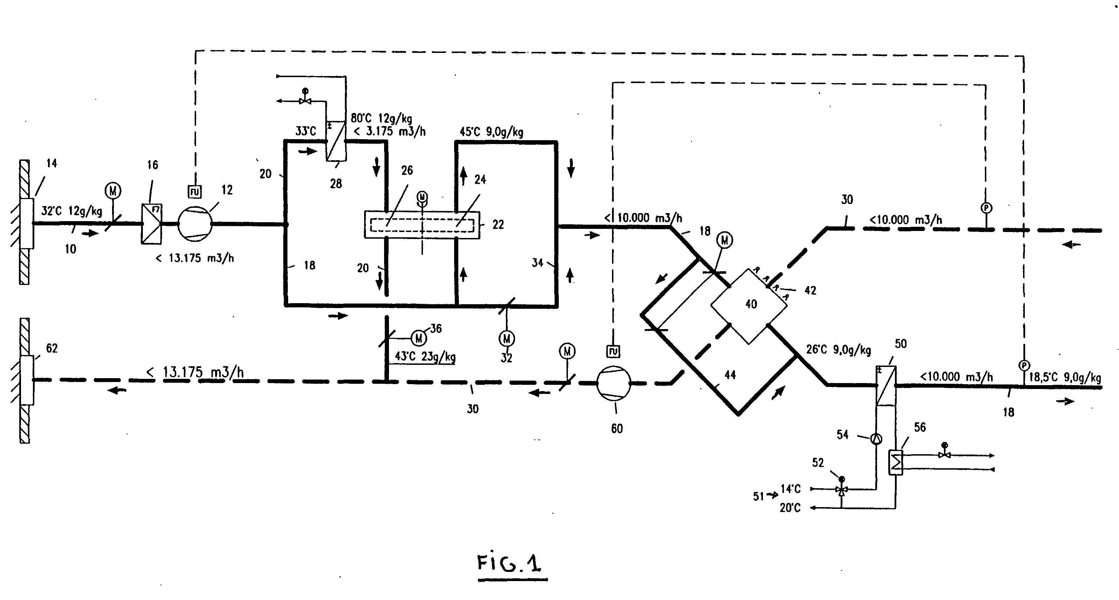

FIG. 1:  ist ein Schaltschema einer Raumlufttechnischen Anlage zum Aufbereiten von feuchtwarmer Außenluft nach einem erfindungsgemäßen Verfahren.

### BESCHREIBUNG EINER BEVORZUGTEN AUSGESTALTUNG DER ERFINDUNG ANHAND DER FIGUREN

Ein feuchtwarmer Außenluftstrom 10 wird von einem volumenstromregelbaren Ventilator 12 (z.B. einem drehzahl- oder drallgeregelten Ventilator 12) über ein Ansauggitter 14 und ein Außenluftfilter 16 angesaugt. Druckseitig wird dieser Außenluftstrom 10 dann in einen Hauptstrom 18 und einen Nebenstrom 20 aufgeteilt.

Das Bezugszeichen 22 bezeichnet einen Sorptionsrotor, wie er z.B. von der Firma Carl Munters (DE) für die Luftentfeuchtung und Trocknung in industriellen Anlagen und in der Wehrtechnik hergestellt wird. Der Prozessluftstrom 18 wird durch einen Entfeuchtungssektor 24 geführt, wobei die hydrophile Oberfläche des Rotors Wassermoleküle aus der Luft absorbiert (bzw. adsorbiert). In einem Regenerationssektor 26 werden das von der hydrophilen Oberfläche des Sorptionsrotors 22 aufgenommene Wasser durch einen heißen Regenerationsluftstrom wieder verdampft, um anschließend mit der Regenerationsluft als Wasserdampf abgeführt zu werden. Der Sorptionsrotor 22 dreht sich hierbei mit ca. 8 Umdrehungen pro Stunde. Die hydrophile Oberfläche des Sorptionsrotors 22 kann zusätzlich bakteriestatische Eigenschaften aufweisen.

Entsprechend der vorliegenden Erfindung wird der vom Ventilator 12 angesaugte Hauptstrom 18 durch den Entfeuchtungssektor 24 des Sorptionsrotors 22 geführt. Der Nebenstrom wird in einem Lufterhitzer 28 auf eine Temperatur von 70 bis 90°C erhitzt und als Regenerationsluft durch den Regenerationssektor 26 des Sorptionsrotors 22 geführt. Am Ausgang des Entfeuchtungssektors 24 weist der Hauptstrom z.B. eine um 3 bis 5 g/kg reduzierte Absolutfeuchte und eine um ca. 8 bis 20°C erhöhte Temperatur auf. Der Nebenluftstrom 20 weist am Ausgang des Regenerationssektor 26 z.B. eine Temperatur von 40 bis 50°C und eine Absolutfeuchte von 20 bis 30 g/kg auf. Der Nebenluftstrom 20 wird anschließend in einen Abluftstrom 30 eingemischt und mit diesem in die Atmosphäre abgeführt.

Ein erstes Durchflussregelorgan, wie z.B. eine Drosselklappe 32, ermöglicht es den Hauptluftstrom ganz oder teilweise durch einen Bypass 34 am Sorptionsrotor 22 vorbeizuführen. Hierdurch kann bei einem reduzierten Entfeuchtungsbedarf die für den Transport des Hauptstroms 18 benötigte Energie stark reduziert werden, da der Bypass 34 einen viel kleineren Luftwiderstand als der Entfeuchtungssektor 24 des Sorptionsrotor 22 darstellt. Ein zweites Durchflussregelorgan, wie z.B. eine Drosselklappe 36, ermöglicht es den Nebenluftstrom 20 an die benötigte Entfeuchtungsleistung anzupassen und somit ebenfalls die für den Transport und die Erhitzung des Nebenstroms 20 benötigte Energie bei reduzierter Entfeuchtungsleistung zu reduzieren. Besteht kein Entfeuchtungsbedarf weil die Absolutfeuchte der Außenluft bereits unter dem gewünschten Wert liegt, ist das erste Durchflussregelorgan 32 völlig geöffnet, so dass fast der gesamte Hauptstrom 18 über den Bypass 34 geleitet wird, und das zweite Durchflussregelorgan 36 völlig geschlossen, so dass der Nebenstrom 20 unterbunden ist. Die beiden Durchflussregelorgane 32, 36 werden also grundsätzlich anti-symmetrisch gefahren, d.h. wenn ein Durchflussregelorgan öffnet, schließt das andere und umgekehrt. Die Luftmenge im Hauptstrom 18 wird hierbei über eine Volumenstromregelung des Ventilators 12 weitgehend konstant gehalten.

Der im Sorptionsrotor getrocknete und erhitzte Hauptstrom der Außenluft wird anschließend in einem Plattenwärmetauscher 40 gekühlt. Diese Kühlung erfolgt durch eine adiabatische Verdunstung von Wasser im Abluftstrom 30 der den Kreuzstromplattenwärmetauscher 40 sekundärseitig durchströmt. Solche Plattenwärmetauscher für Verdunstungskühlung werden z.B. von der Firma Polybloc AG (CH) unter der Bezeichnung "Plattenwärmetauscher mit softcool" vermarktet. Sekundärseitig weist ein solcher Plattenwärmetauscher eine hydrophile Oberfläche auf, die Mittels Spezialdüsen 42 möglichst homogen mit sehr fein zersprühtem Wasser benetzt wird. Der relativ trockene Abluftstrom 30 aus dem klimatisierten Gebäude wird über diese hydrophile Oberfläche der Sekundärseite geleitet, wobei das auf der hydrophilen Oberfläche verdunstende Wasser aufnimmt. Durch diese Verdunstung wird den Zwischenwänden des Plattenwärmetauschers 40 und somit auch dem primärseitigen Hauptstrom 20 Wärmeenergie entzogen. Der Wirkungsgrad ist hierbei relativ hoch, da der primärseitige Hauptstrom beim Eintritt in den Wärmetauscher sehr heiß und trocken ist und die Abluft der Klimaanlage ebenfalls relativ trocken und eine Taupunkttemperatur von etwa 18,5°C aufweist. Der heißtrockene Hauptstrom 18 lässt sich somit problemlos um 15 bis 25°C abkühlen, wobei ohne weiteres eine maximale Temperatur von 24 bis 28°C am primärseitigen Ausgang des Plattenwärmetauscher 40 gewährleistet werden kann. Die Regelung der Kühlleistung wird durch z.B. durch eine On/Off-Regelung der Benetzung der sekundärseitigen Oberfläche des Plattenwärmetauschers 40 vorgenommen. Im Winter kann der Plattenwärmetauscher auch ohne Benetzung auch für die Wärmerückgewinnung aus dem Abluftstrom 30 eingesetzt werden, wodurch die benötigte Heizenergie reduziert wird. Ein Bypass 44 ermöglicht es den Hauptstrom geregelt am Plattenwärmetauscher 40 vorbeizuführen falls weder eine Kühlung noch eine Wärmerückgewinnung sinnvoll ist.

Das Bezugzeichen 50 bezeichnet einen Wärmetauscher, in dem der Hauptstrom 18 trockenen, d.h. ohne weitere Wasserausscheidung, auf die gewünschte Zulufttemperatur abgekühlt wird. Der Wärmetauscher 50 ist an einen Kühlwasserkreis 51 angeschlossen. Ein Dreiwegeventil 52 und eine Pumpe 54 ermöglichen eine genaue Regelung der Kühlleistung. Mann beachte, dass der Kühlwasserkreis 51 mit relativ hohen Temperaturen (14 °C/20 °C) betrieben werden kann, da bei der Nachkühlung 50 die Luft nicht mehr entfeuchtet werden muss.

Im Winter kann der Wärmetauscher 50 auch als Lufterhitzer betrieben werden. Hierzu ist z.B. ein Wasser-Wasser-Wärmetauscher 56 vorsehen, der bei geschlossenem Dreiwegeventil 52, das von der Pumpe 54 durch den Wärmetauscher 50 zirkuliert Wasser erhitzt.

Es bleibt anzumerken, der Abluftstrom 30 mittels eines Abluftventilators 60 über ein Abluftgitter 62 ins Freie befördert wird und im Abluftsystem vor dem Plattentauscher kein Filter benötigt wird.

Die vorgenannten Temperaturen sind praxisgerecht und beziehen sich auf Entfeuchtungsleistungen von 3 bis 4 g/kg. Bei anderer Auslegung verschieben sich die Temperaturen und Leistungen entsprechend den physikalischen Grundlagen.

## Energiekostenvergleich

Es wird nun das vorbeschriebene, erfindungsgemäße System mit einem System mit einer traditionellen Kühlung, d.h. ein System mit Kolbenverdichtern, einem Kaltwasserkreislauf 6/12 °C, einem Kaltwasser-Luftkühler und einem Nacherhitzer, verglichen.

Um den Vergleich einfach nachvollziehbar zu halten, wird teilweise ein vereinfachtes Rechenmodell benutzt. Für einen korrekten Vergleich der Energiekosten wird außerdem davon ausgegangen, dass beide Systeme die gleiche Entfeuchtungsleistung erbringen (gewährleistete maximale Absolutfeuchte der Zuluft: 9 g/kg). Hierzu ist jedoch anzumerken, dass der Sorptionsrotor 22 des erfindungsgemäßen Systems problemlos eine Absolutfeuchte der Zuluft von unter 8 g/kg gewährleisten könnte, während bei einer traditionellen Kühlung eine Absolutfeuchte von 10 g/kg in der Regel nicht unterschritten wird.

| Ausgangsdaten: | | |
|---|---|---|
| Luftmenge Zu- und Abluft | $m^3/h$ | 10.000 |
| | $m^3/s$ | 2,7778 |
| | kg/s | 3,3333 (bei d = 1,20 $kg/m^3$) |
| **Außenluft-Sommer:** | | |
| Temperatur | °C | 32 |
| Feuchte | g/kg | 12,0 |
| Enthalpie | kJ/kg | 63 |
| **Raumabluft-Sommer:** | | |
| Temperatur | °C | 26 |
| Feuchte | g/kg | 10,0 |
| **Zuluft:** | | |
| Temperatur | °C | 18,5 (ganzjährig) |
| Feuchte | g/kg | < 9,0 |

| Enthalpie | kJ/kg | 41,3 |
|---|---|---|
| Wetterstation | | Trier (DE) |
| Jahresenergiebedarf Heizen | kWh/a | 124.150 |
| Jahresenergiebedarf Kühlen | kWh/a | -10.640 |
| Jahresenergiebedarf Entfeuchten | kWh/a | -10.190 |
| Entfeuchtungsstunden (→ 9,0 g/kg): | h/a | 1322 |
| Betriebszeit | h/d | 12 (6 :00 bis 18 :00 Uhr) |
| | h/a | 4380 (d.h. 365 d/a) |
| Stromkosten | €/kWh | 0,075 |
| Wärmekosten Fernheizung | €/kWh | 0,033 (Winter) |
| Wärmekosten Fernheizung | €/kWh | 0,015 (Sommer) |

Zwecks Vereinfachung wird davon ausgegangen, dass die Zulufttemperatur auf einen festen Wert eingestellt ist.

Die Jahresenergiebedarf für Heizen, Kühlen und Entfeuchten wurde nicht nach der VDI 2071 (DE) berechnet sondern, auf der Basis der zugeordnenten Ablufttemperaturen zu der gewünschten Zulufttemperatur in Abhängigkeit der Aussenlufttemperatur. Dieses Verfahren liefert bei der Bestimmung der Kälterückgewinnungsleistung erheblich genauere Werte.

System mit traditioneller Kühlung

Wird die Außenluft in einem klassischen Kaltwasser-Luftkühler getrocknet, der an einen Kaltwasserkreis 6/12 °C angeschlossen ist, muss sie für eine Reduzierung der Absolutfeuchte auf 9,0 g/kg auf eine Taupunkttemperatur von 12,4°C unterkühlt werden (diesem Taupunkt entspricht eine Enthalpie von 35 kJ/kg). Anschließend muss der Außenluftstrom wieder auf die gewünschte Zulufttemperatur von 18,5°C aufgeheizt werden. Diese Energievernichtung erfolgt immer dann wenn die Absolutfeuchte der Außenluft eine gewünschte maximale Absolutfeuchte von 9,0 g/kg übersteigt. Das sind nach der Wetterstation Trier (DE) 1322 h/a.

Es ist folglich pro Jahr eine nicht nutzbare zusätzliche Kühlenergie aufzubringen von:

$$3,3333 \text{ kg/s x 1 kJ/kgK x } (12,4°C - 18,5°C) \text{ x } 1.322 \text{ h/a} = -26.881 \text{ kWh/a}$$

Die gleiche Energiemenge ist als Heizenergie zum Nachheizen der unterkühlten Luft auf 18,5 °C Zulufttemperatur erforderlich und verschlechtert die Energiebilanz dadurch nochmals.

| Kälteenergiebedarf pro Jahr im System mit traditioneller Kühlung | |
|---|---:|
| Kühlen | -10.640 kWh/a |
| Kälterückgewinnung (8% von 10.640 kWh) | 851 kWh/a |
| Entfeuchten | -10.190 kWh/a |
| Unterkühlen auf Taupunkt zwecks Entfeuchtung | -26.881 kWh/a |
| **Gesamtkälteenergiebedarf pro Jahr** | **-46.860** kWh/a |

Zu installierende Kälteleistung:

$$3,3333 \text{ kg/s x } (35 \text{ kJ/kg} - 63 \text{ kJ/kg}) = -93,33 \text{ kW}$$

Zu installierende Nachheizleistung:

$$3,3333 \text{ kg/s x 1 kJ/kgK x } (18,5°C - 12,4°C) = 20,00 \text{ kW}$$

Erfindungsgemäßes System

In einem erfindungsgemäßen System wird die Heizleistung für die Regeneration des Sorptionsrotors 22 gebraucht. Bei maximaler Entfeuchtungsleistung sind für den Betrieb der Regeneration des Sorptionsrotors 3.175 m$^3$/h (= 0.8819 m3/s oder 1,0583 kg/s) Renerationsluft mit einer Temperatur von 80°C erforderlich.

Die für die Regeneration des Sorptionsrotors 22 benötigte maximale Heizleistung des Lufterhitzers 28 beträgt folglich:

$$1,0583 \text{ kg/s x } (80°C - 32°C) \text{ x } 1,004 \text{ kJ/kg/K} = 51,0 \text{ kW}$$

Diese maximale Heizleistung des Lufterhitzers 28 wird jedoch nur bei maximaler Entfeuchtungsleistung des Sorptionsrotors 22 benötigt, d.h. wenn die Außenluft eine Absolutfeuchte von 12,0 g/kg aufweist. Ein solcher Außenluftzustand gilt im Raum Trier statistisch jedoch nur für 141 h/a. Die restlichen Stunden ist eine geringere Entfeuchtungsleistung erforderlich, d.h. dass der Sorptionsrotor ebenfalls eine geringere Heizleistung für seine Regeneration benötigt. Übers Jahr gemittelt liegt die Heizleistung für die Regeneration des Sorptionsrotors bei etwa einem Drittel (Vereinfachung im Rechenmodell) der Maximalleistung von 51 kW, d.h. bei ungefähr 17 kW.

Für die 1322 Betriebsstunden pro Jahr, für welche im Raum Trier die Absolutfeuchte der Außenluft zwischen 9,0 g/kg und 12 g/kg liegt, besteht demnach ein Heizenergiebedarf für die Regeneration des Sorptionsrotors 22 von:

$$17 \text{ kW x } 1322 \text{ h/a} = 22.474 \text{ kWh/a}$$

Hinter dem Sorptionsrotor 22 weist die Außenluft die gewünschte Feuchte der Zuluft von 9 g/kg und eine erhöhte Temperatur von 43°C auf.

Diese warme, trockene Luft (relative Luftfeuchte kleiner als 20 %) wird anschließend dem Plattenwärmetauscher 40 zugeführt um bei einer konstanten Absolutfeuchte von 9,0 g/kg auf 25°C abgekühlt zu werden. Diese Kühlung erfolgt durch eine adiabatische Verdunstung von Wasser im Abluftstrom 30 der den Plattenwärmetauscher sekundärseitig durchströmt.

Hinter dem Plattenwärmetauscher 40 wird die Zuluft dann von 25°C auf die gewünschte Zulufttemperatur von 18,5°C im Wärmetauscher 50, der als nicht kondensierender Kaltwasser-Luftkühler arbeitet, abgekühlt. Die hierzu benötigte Kälteleistung beträgt:

$$3{,}3333 \text{ kg/s x } (18{,}5°C\text{-}25°C) \text{ x } 1{,}004 \text{ kJ/kg/K} = -21{,}7 \text{ kW}$$

Die beim erfindungsgemäßen System zu installierende Kälteleistung beträgt folglich nur etwa 18 % der beim System mit traditioneller Kühlung zu installierenden Kälteleistung (21,7 kW gegenüber 93,33 kW).

Von dem Jahresenergiebedarf Kühlen (10.640 kWh/a) decken der Sorptionsrotor 22 in Verbindung mit dem Plattenwärmetauscher 40 rund 84 % ab, d.h. **8.937,6 kWh/a.** Dieser extrem hohe Wirkungsgrad ist durch günstigen Einsatzbedingungen des Plattentauschers begründet, der mit über 35 K Differenztemperatur bei annähernd gleicher Ablufttemperatur mit wasserbenetzer Oberfläche optimale Einsatzbedingungen hat.

Von dem Jahresenergiebedarf Entfeuchten (10.190 kWh/a) deckt der Sorptionsrotor 100 %.

Elektrischer Energieverbrauch im System mit traditioneller Kühlung

Für die Kälteanlage, inklusive Nebenaggregate, wird von einem Verhältnis 3:1 von Kälteleistung zu aufgenommener elektrischer Leistung für den Vergleich ausgegangen.

Die Anlage mit traditioneller Kühlung hat folglich eine maximale elektrische Leistungsaufnahme für die Kälteerzeugung von:

$$93{,}33 \text{ kW : } 3 = 31{,}11 \text{ kW}$$

Der Jahresverbrauch an elektrischer Energie für die Kälteerzeugung beträgt:

$$47.740 \text{ kWh/a : } 3 = 15.913 \text{ kWh/a}$$

Der Druckverlust des Luftkühler mit Tropfenabscheider (0,2 kPa) fällt über die ganze Betriebszeit, d.h. während 4.380 h/a an. Bei einem Gesamtwirkungsgrad der Ventilator-Motor-Einheit von 50 % wird folgende elektrische Energie für die Durchströmung des Luftkühler mit Tropfenabscheider benötigt:

$$(2{,}7778 \text{ m3 /s x } 0{,}2 \text{ kPa / } 0{,}50) \text{ x } 4380 \text{ h} = 4.866 \text{ kWh/a}$$

Elektrischer Energieverbrauch im erfindungsgemäßen System

In einem erfindungsgemäßen System werden für die Kälteerzeugung 21,7 kW : 3 **= 7,2 kW** elektrische Leistung benötigt.

Der Jahresenergieverbrauch für die Kälteerzeugung beträgt:

$$(10.640 \text{ kWh/a -8950 kWh/a}) \text{ / } 3 = 563{,}3 \text{ kWh/a}$$

Der für die Regenerationsluft zur Verfügung stehende Druckverlust beträgt ungefähr 1 kPa. Für den Transport der Regenerationsluftmenge wird, bei einem Gesamtwirkungsgrad der Ventilator-Motor-Einheit von 50%, maximal folgende elektrische Leistung aufgenommen:

$$0{,}88194 \text{ m}^3\text{/s x } 1 \text{ kPa / } 0{,}50 \approx 1{,}76 \text{ kW}$$

Regenerationsluft wird nur benötigt falls die Absolutfeuchte der Außenluft 9,0 g/kg übersteigt. Das sind 1322h im Jahr. Zudem wird die Regenerationsluftmenge in Funktion der erforderlichen Entfeuchtungsleistung geregelt, so dass die übers Jahr gemittelte elektrische Leistungsaufnahme für den Transport der Regenerationsluft nur ungefähr 33 % (Vereinfachung des Rechenmodells) der maximalen Leistungsaufnahme von 1,76 kW beträgt. Der elektrische Energieverbrauch für den Transport der Regenerationsluft beträgt pro Jahr folglich:

$$0{,}33 \text{ x } 1{,}76 \text{ kW x } 1322 \text{ h/a} \approx 767{,}8 \text{ kWh/a}$$

Der Druckverlust des Hauptstroms der Außenluft im Sorptionsrotor 22 beträgt ungefähr 0,5 kPa. Für den Transport der Hauptstrommenge wird, bei einem Gesamtwirkungsgrad der Ventilator-Motor-Einheit von 50%, maximal folgende elektrische Leistung aufgenommen:

$$2,7778 \text{ m}^3/\text{s} \times 0,5 \text{ kPa} / 0,50 \approx 2,78 \text{ kW}$$

Der Hauptstrom wird nur durch den Sorptionsrotor geleitet falls eine Entfeuchtung erforderlich ist. Dies ist der Fall während 1322 h im Jahr. Zudem wird in Abhängigkeit der erforderlichen Entfeuchtungsleistung ein Teil des Hauptstroms über einen Bypass am Sorptionsrotor vorbeigeleitet, so dass die übers Jahr gemittelte elektrische Leistungsaufnahme für den Transport des Hauptstroms nur ungefähr 33 % (Vereinfachung des Rechenmodells) der maximalen Leistungsaufnahme von 2,78 kW beträgt. Der elektrische Energieverbrauch für den Transport des Hauptstroms beträgt pro Jahr folglich:

$$0,33 \times 2,78 \text{ kW} \times 1322 \text{ h/a} \approx 1212,8 \text{ kWh/a}$$

Der gesamte Verbrauch elektrischer Energie im Ventilator 12 für die Überwindung von Druckverlusten im Sorptionsrotor 22 beträgt demnach pro Jahr:

$$767.8 \text{ kWh/a} + 1212,8 \text{ kWh/a} = 1980.6 \text{ kWh/a}$$

Heizenergie und Wärmerückgewinnung

Um den Vergleich der beiden Systeme zu vervollständigen ist ebenfalls den unterschiedlichen Rückwärmezahlen Rechnung zu tragen.

Bei dem System mit traditioneller Kühlung wird eine Wärmerückgewinnung mit einem Wirkungsgrad von 50% angenommen. Bedingt durch die Berücksichtigung der tatsächlichen Ablufttemperaturen in Bezug auf die gewünschte Zulufttemperatur in Abhängigkeit der Aussenlufttemperatur entspricht dieses einer Jahresdeckungsrate von 62%. Die zu erzeugende Heizenergie beträgt folglich:

$$124.150 \text{ kWh/a} \times 0,38 = 47.177 \text{ kWh/a}$$

Bei dem erfindungsgemäßen System kann unter diesen Umständen eine Wärmerückgewinnung mit einem Wirkungsgrad von 75 % festgehalten werden. Dies entspricht einer Jahresdeckungsrate von 90 %. Die zu erzeugende Heizenergie beträgt folglich:

$$124.150 \text{ kWh/a} \times 0,10 = 12.415 \text{ kWh/a}$$

## Jahresbetriebskosten des Systems mit traditioneller Kühlung

| | | |
|---|---|---|
| Kältemaschine: | 15.913 kWh/a x 0,075 €/kWh = | 1.194 € |
| Ventilator: | 4.866 kWh/a x 0,075 €/kWh = | 365 € |
| Heizung: | 47.177 kWh/a x 0,033 €/kWh = | 1.557 € |
| Nachheizung: | 27.761 kWh/a x 0,015 €/kWh = | 417 € |
| Summe: | | **3.533 €** |

## Jahresbetriebskosten des erfindungsgemäßes System

| | | |
|---|---|---|
| Kältemaschine: | 563,3 kWh/a x 0,075 €/kWh = | 43 € |
| Ventilator: | 1980.6 kWh/a x 0,075 €/kWh = | 149 € |
| Heizung: | 12.415 kWh/a x 0,033 €/kWh = | 410 € |
| Regenerationsenergie: | 22.474 kWh/a x 0,015 €/kWh = | 337 € |
| **Summe:** | | **939 €** |

Schlussbewertung:

Das erfindungsgemäße System arbeitet erheblich wirtschaftlicher als ein System mit üblicher Kältetechnik. Die verbrauchsproportionalen Jahresenergiekosten des erfindungsgemäßen System liegen bei ungefähr 24 % der entsprechenden Kosten bei einem System mit üblicher Kältetechnik. Die Kosten für die Leistungsbereitstellung liegen bei einem Verhältnis von 7,5 kW zu 31 kW, d.h. einem Verhältnis von 1:4.

Außerdem benötigt die traditionelle Kältetechnik einen höheren Wartungsaufwand und bringt größere Stillstandsverluste.

Im Teillastbetrieb verbessert sich der Wirkungsgrad eines erfindungsgemäßen Systems nochmals. Man kann demnach vernünftig davon ausgehen, dass die Gesamtbetriebskosten beim erfindungsgemäßen System nur noch 15 bis 20 % der Gesamtbetriebskosten einer, vergleichbaren, traditionellen RLT-Anlage betragen.

Zusätzlich ist anzumerken, dass mit einem erfindungsgemäßen System problemlos eine Reduzierung der Absolutfeuchte der Außenluft auf 8,0 g/kg, dies ist eine erheblich niedrigere Absolutfeuchte als in Systemen mit traditioneller Kühlung sinnvoll ist. Bei modernen RLT-Anlagen, bei denen bei denen ein Teil der Kühllast im Sommer durch eine Kühldecke abgedeckt wird, sind niedrigere Absolutfeuchten von Vorteil, da dadurch die Gefahr von Kondensation an der Kühldecke stark reduziert wird.

## Patentansprüche

1. Verfahren zum Aufbereiten von Außenluft in einer raumlufttechnischen Anlage mit einem Sorptionsrotor (22) als Luftentfeuchter, wobei:

   ein Ventilator (12) einen Außenluftstrom ansaugt;
   dieser Außenluftstrom druckseitig vom Ventilator (12) in einen Hauptstrom (18) und einen Nebenstrom (20) aufgeteilt wird;
   der Hauptstrom (18) zwecks Entfeuchtung durch einen Entfeuchtungssektor (24) des Sorptionsrotors (22) geführt wird;
   der Nebenstrom (20), nach Aufheizen in einem Erhitzer (28), als Regenerationsluft durch einen Regenerationssektor (26) des Sorptionsrotors (22) geführt wird;
   der im Sorptionsrotor (22) getrocknete und erhitzte Hauptstrom (18) durch eine Rückkühlanlage geführt wird, in der er rückgekühlt wird;

   **dadurch gekennzeichnet, dass**
   in Abhängigkeit der erforderlichen Entfeuchtungsleistung, der Hauptstrom (18) ganz oder teilweise über einen Bypass (34) mit einem ersten Durchflussregelorgan (32) am Sorptionsrotor (22) vorbeigeleitet wird, und der Nebenluftstrom (20) mittels einem zweiten Durchflussregelorgan (36) regelbar ist; wobei die Luftmenge im Hauptstrom (18) über eine Volumenstromregelung des Ventilators(12) weitgehend konstant gehalten wird.

2. Verfahren nach Anspruch 1, **dadurch gekennzeichnet, dass** das zweite Durchflussregelorgan (36) schließt wenn das erste Durchflussregelorgan (32) öffnet und umgekehrt.

3. Verfahren nach einem der Ansprüche 1 oder 2, **dadurch gekennzeichnet, dass** der Nebenluftstrom (20) auf eine Temperatur von 60 bis 120°C aufgeheizt wird.

4. Verfahren nach einem der Ansprüche 1 bis 3, **dadurch gekennzeichnet, dass** sich die warmfeuchte Außenluft bei der Entfeuchtung im Sorptionsrotor (22) um weitere 6 bis 35°C erhitzt.

5. Verfahren nach einem der Ansprüche 1 bis 4, **dadurch gekennzeichnet, dass** die Rückkühlanlage (40) einen Plattenwärmetauscher (40) umfasst, wobei der im Sorptionsrotor (22) getrocknete und erhitzte Hauptstrom (18) primärseitig durch den Plattenwärmetauscher (40) geführt wird, und in diesem durch eine sekundärseitige Verdunstung von Wasser gekühlt wird.

6. Verfahren nach Anspruch 5, **dadurch gekennzeichnet, dass** der Hauptstrom (18) hinter dem Plattenwärmetauscher (40) trocken auf die gewünschte Zulufttemperatur nachgekühlt wird.

7. Verfahren nach Anspruch 5 oder 6, **dadurch gekennzeichnet, dass** der Plattenwärmetauscher (40) ein Luft-Luft-Ptattenwärmetauscher ist, der primärseitig mit dem getrockneten und erhitzten Hauptstron (18) beaufschtagt wird, der sekundärseitig mit einem Raumabluftstrom (30) beaufschlagt wird, und der sekundärseitig eine hydrophile Oberfläche aufweist die mit Wasser benetzt wird, das nach Verdampfen auf der sekundärseitigen Oberfläche von dem sekundärseitigen Raumabluftstrom (30) aufgenommen wird.

8. Verfahren nach Anspruch 7, **dadurch gekennzeichnet, dass** im Winter der Plattenwärmetauscher (40) ohne Benetzung der sekundärseitigen Oberfläche für eine Wärmerückgewinnung aus dem Abluftstrom (30) eingesetzt wird.

9. Verfahren nach Anspruch 8, **dadurch gekennzeichnet, dass** in der Übergangszeit, falls keine sinnvolle Wärmerückgewinnung oder Nachkühlung im Plattenwärmetauscher (40) möglich sind, der Hauptstrom (18) über einen Bypass (44) am Plattenwärmetausche (40) vorbeigeführt wird.

10. Raumlufttechnische anlage zum Aufbereiten von Außenluft, umfassend:

    einen Ventilator (12) zum Ansaugen eines Außenluftstroms (10);

    einen Sorptionsrotor (22) mit einem Entfeuchtungssektor (24) und einem Regenerationssektor (26);

    Luftleitmittel zwischen dem Ventilator (12) und dem Sorptionsrotor (22), zum Aufteilen des angesaugten Außenluftstroms (10) in einen Hauptstrom (18) und einen Nebenstrom (20), wobei der Hauptstrom (18) zum Entfeuchtung durch den Entfeuchtungssektor (24) des Sorptionsrotors (22) geführt wird;

    einen Erhitzer (28) zum Aufheizen des Nebenstroms (20), wobei der aufgeheizte Nebenstrom (20) als Regenerationsluft durch den Regenerationssektor (26) des Sorptionsrotors (22) geführt wird; und

    eine Rückkühlanlage (40) zum Rückkühlen des im Entfeuchtungssektor (24) entfeuchteten Hauptstroms (18);

    **gekennzeichnet durch**
    einen Bypass (34) mit einem ersten Durchflussregelorgan (32) der den Entfeuchtungssektor (24) des Sorptionsrotors (22) überbrückt, so dass der Hauptstrom (18) in Funktion der Entfeuchtungsleistung ganz oder teilweise **durch** den Bypass (34) am Sorptionsrotor (22) vorbeigeführt werden kann;
    ein zweites Durchflussregelorgan (36) im Nebenstrom (20), so dass der Nebenluftstrom (20) in Funktion der Entfeuchtungsleistung regelbar ist; und
    eine Volumenstromregelung des Ventilators (12), welche die Luftmenge im Hauptstrom (18) weitgehend konstant hält.

11. Raumlufttechnische Anlage nach Anspruch 10, **dadurch gekennzeichnet, dass** die Regelmittel derart ausgelegt sind, dass das zweite Durchflussregelorgan (36) schließt wenn das erste Durchflussregelorgan (32) öffnet und umgekehrt.

12. Raumlufttechnische Anlage nach einem der Ansprüche 1 0 oder 11, **dadurch gekennzeichnet, dass** dem Ventilator (12) Filtermittel (12) vorgeschaltet sind.

**13.** Raumlufttechnische Anlage nach Anspruch 10 bis 12, **gekennzeichnet durch**:

einen Luft-Luft-Plattenwärmetauscher (40), der hinter den Entfeuchtungssektor (24) primärseitig in den Hauptstrom (18) geschaltet ist, und sekundärseitig eine hydrophile Tauscheroberfläche und Düsen (42) zum Benetzen dieser Tauscheroberfläche mit fein zersprühten Wasser aufweist; und

Mittel zum Führen eines Abluftstroms der Raumlufttechnische Anlage über die sekundärseitig Tauscheroberfläche.

**14.** Raumlufttechnische Anlage nach Anspruch 13, **gekennzeichnet durch** einen geregelten Bypass (44) der es ermöglicht den Hauptstrom (18) geregelt am Plattenwärmetauscher (40) vorbeizuführen.

**15.** Raumlufttechnische Anlage nach Anspruch 13 oder 14, **gekennzeichnet durch** mindestens einen Wärmetauscher (50) der hinter dem Plattenwärmetauscher (40) in den Hauptstrom (18) geschaltet ist.

**Claims**

**1.** Method for preparing outside air in a ventilation and air-conditioning installation having a sorption rotor (22) as air dehumidifier, in which:

a fan (12) sucks in an outside-air stream;

this outside-air stream is divided on the pressure side of the fan (12) into a main stream (18) and an auxiliary stream (20);

the main stream (18) is passed through a dehumidification sector (24) of the sorption rotor (22) in order to be dehumidified;

the auxiliary stream (20), after it has been heated in a heater (28), is passed as regeneration air through a regeneration sector (26) of the sorption rotor (22);

the main stream (18), which has been dried and heated in the sorption rotor (22), is passed through a recooling installation (40), in which it is recooled;

**characterized in that**
depending on the required dehumidification power, the main stream (18) is made to completely or partially bypass the sorption rotor (22) via a bypass (34) with a first flow-regulating member (32), and the auxiliary air stream (20) can be regulated by means of a second flow-regulating member (36), the quantity of air in the main stream (18) being kept substantially constant by means of volumetric-flow control of the fan (12).

**2.** Method according to Claim 1, **characterized in that** the second flow-regulating member (36) closes when the first flow-regulating member (32) opens, and vice versa.

**3.** Method according to Claim 1 or 2, **characterized in that** the auxiliary air stream (20) is heated to a temperature of from 60 to 120°C.

**4.** Method according to one of Claims 1 to 3, **characterized in that** the warm, humid outside air is heated by a further 6 to 35°C during the dehumidification in the sorption rotor (22).

**5.** Method according to one of Claims 1 to 4, **characterized in that** the recooling installation (40) comprises a plate-type heat exchanger (40), with the main stream (18) which has been dried and heated in the sorption rotor (22) being passed on the primary side through the plate-type heat exchanger (40), in which it is cooled by evaporation of water on the secondary side.

**6.** Method according to Claim 5, **characterized in that** the main stream (18), downstream of the plate-type heat exchanger (40), is recooled in the dry state to the desired feed-air temperature.

**7.** Method according to Claim 5 or 6, **characterized in that** the plate-type heat exchanger (40) is an air-air plate-type heat exchanger, which on the primary side is acted on by the dried and heated main stream (18), on the secondary side is acted on by a room outgoing-air stream and on the secondary side has a hydrophilic surface which is wetted with water which is taken up by the secondary-side room outgoing-air stream (30) after the evaporation on the secondary-side surface.

**8.** Method according to Claim 7, **characterized in that** in winter, the plate-type heat exchanger (40) is used without wetting of the secondary-side surface to recover heat from the outgoing-air stream (30).

**9.** Method according to Claim 8, **characterized in that** in transitional seasons between winter and summer, if no useful heat recovery or recooling is possible in the plate-type heat exchanger, the main stream (18) is made to bypass the plate-type heat exchanger (40) via a bypass (44).

**10.** Ventilation and air-conditioning installation for preparing outside air, comprising:

a fan (12) for sucking in an outside-air stream (10);

a sorption rotor (22) having a dehumidification sector (24) and a regeneration sector (26);

air-guide means between the fan (12) and the sorption rotor (22), for dividing the intake outside-air stream (10) into a main stream (18) and an auxiliary stream (20), the main stream (18) being passed through the dehumidification sector (24) of the sorption rotor (22) in order to be dehumidified;

a heater (28) for heating the auxiliary stream (20), the heated auxiliary stream (20) being passed as regeneration air through the regeneration sector (26) of the sorption rotor (22); and

a recooling installation (40) for recooling the main stream (18) which has been dehumidified in the dehumidification sector (24);

**characterized by**
a bypass (34) having a first flow-regulating member (32) which bridges the dehumidification sector (24) of the sorption rotor (22), so that the main stream (18) can be made to completely or partially bypass the sorption rotor (22) through the bypass (34) as a function of the dehumidification power;
a second flow-regulating member (36) in the auxiliary stream (20), so that the auxiliary air stream (20) can be regulated as a function of the dehumidification power; and
a volumetric-flow control for the fan (12), which keeps the quantity of air in the main stream (18) substantially constant.

**11.** Ventilation and air-conditioning installation according to Claim 10, **characterized in that** the control and regulating means are designed in such a manner that the second flow-regulating member (36) closes when the first flow-regulating member (32) opens, and vice versa.

**12.** Ventilation and air-conditioning installation according to Claim 10 or 11, **characterized in that** filter means (12) are connected upstream of the fan (12).

**13.** Ventilation and air-conditioning installation according to Claims 10 to 12, **characterized by**:

an air-air plate-type heat exchanger (40) which, downstream of the dehumidification sector (24), on the primary side is connected into the main stream (18) and on the secondary side has a hydrophilic exchanger surface and nozzles (42) for wetting this exchanger surface with finely atomized water;
and

means for passing an outgoing-air stream from the ventilation and air-conditioning installation over the exchanger surface on the secondary side.

**14.** Ventilation and air-conditioning installation according to Claim 13, **characterized by** a controlled bypass (44) which enables the main stream (18) to bypass the plate-type heat exchanger (40) in a controlled manner.

**15.** Ventilation and air-conditioning installation according to Claim 13 or 14, **characterized by** at least one heat exchanger (50) which is connected into the main stream (18) downstream of the plate-type heat exchanger (40).

## Revendications

**1.** Procédé de traitement d'air extérieur dans une installation de conditionnement d'air comprenant un rotor de sorption (22) comme déshumidificateur d'air, dans lequel :

un ventilateur (12) aspire un flux d'air extérieur ;

ce flux d'air extérieur est divisé côté refoulement du ventilateur (12) en un flux principal (18) et un flux secondaire (20) ;

le flux principal (18), dans le but de le déshumidifier, est conduit à travers un secteur de déshumidification (24) du rotor de sorption (22) ;

le flux secondaire (20), après réchauffage dans un réchauffeur (28), est conduit comme air de régénération à travers un secteur de régénération (26) du rotor de sorption (22) ;

le flux principal (18), séché et réchauffé dans le rotor de sorption (22), est conduit à travers une installation de refroidissement (40) où il est refroidi ;

**caractérisé en ce que**
en fonction de la capacité de déshumidification nécessitée, on fait passer le flux principal (18), en tout ou partie, par un by-pass (34) équipé d'un premier organe régulateur de débit (32), en contournement du rotor de sorption (22) et on peut réguler le flux d'air secondaire (20) au moyen d'un second organe régulateur de débit (36), le débit d'air dans le flux principal (18) étant maintenu sensiblement constant par une régulation du débit volumétrique du ventilateur (12).

**2.** Procédé selon la revendication 1, **caractérisé en ce que** le second organe régulateur de débit (36) ferme quand le premier organe régulateur de débit (32) ouvre, et vice versa.

**3.** Procédé selon l'une des revendications 1 et 2, **caractérisé en ce que** le flux d'air secondaire (20) est porté à une température comprise entre 60 et 120°C.

**4.** Procédé selon l'une des revendications 1 à 3, **caractérisé en ce que** l'air extérieur chaud et humide se réchauffe encore de quelque 6 à 35°C pendant la déshumidification dans le rotor de sorption (22).

**5.** Procédé selon l'une des revendications 1 à 4, **caractérisé en ce que** l'installation de refroidissement (40) comprend un échangeur de chaleur à plaques (40), le flux principal (18), séché et réchauffé dans le rotor de sorption (22), étant conduit à travers ledit échangeur de chaleur à plaques (40) du côté primaire et refroidi dans celui-ci par évaporation d'eau du côté secondaire.

**6.** Procédé selon la revendication 5, **caractérisé en ce qu'**en aval de l'échangeur de chaleur à plaques (40), le flux principal (18) est refroidi à l'état sec à la température d'air d'apport désirée.

**7.** Procédé selon la revendication 5 ou 6, **caractérisé en ce que** l'échangeur de chaleur à plaques (40) est un échangeur de chaleur à plaques air-air qui est alimenté du côté primaire avec le flux principal (18) séché et réchauffé, qui est alimenté du côté secondaire avec un flux d'air vicié (30) et qui présente du côté secondaire une surface hydrophile mouillée avec de l'eau qui après évaporation sur la surface du côté secondaire est absorbée par le flux d'air vicié (30) du côté secondaire.

**8.** Procédé selon la revendication 7, **caractérisé en ce que** l'échangeur de chaleur à plaques (40) est utilisé en hiver sans mouillage de la surface du côté secondaire pour une récupération de chaleur dans le flux d'air vicié (30).

**9.** Procédé selon la revendication 8, **caractérisé en ce que** pendant la période de transition, si aucune récupération de chaleur ou refroidissement secondaire raisonnable dans l'échangeur de chaleur à plaques (40) n'est possible, on fait passer le flux principal (18) par un bypass (44) en contournement de l'échangeur de chaleur à plaques (40).

**10.** Installation de conditionnement d'air pour le traitement d'air extérieur, comprenant :

un ventilateur (12) destiné à aspirer un flux d'air extérieur (10) ;

un rotor de sorption (22) avec un secteur de déshumidification (24) et un secteur de régénération (26) ;

des moyens conducteurs d'air entre le ventilateur (12) et le rotor de sorption (22), destinés à diviser le flux d'air extérieur (10) aspiré en un flux principal (18) et un flux secondaire (20), le flux principal (18), dans le but de le déshumidifier, étant conduit à travers le secteur de déshumidification (24) du rotor de sorption (22) ;

un réchauffeur (28) destiné à réchauffer le flux secondaire (20), le flux secondaire (20) réchauffé étant conduit comme air de régénération à travers le secteur de régénération (26) du rotor de sorption (22) ; et

une installation de refroidissement (40) destinée à refroidir le flux principal (18) déshumidifié dans le secteur de déshumidification (24) ;

**caractérisée par**
un by-pass (34) équipé d'un premier organe régulateur de débit (32) qui court-circuite le secteur de déshumidification (24) du rotor de sorption (22), de façon à ce qu'en fonction de la puissance de déshumidification, le flux principal (18) passe à travers ledit by-pass (34) en tout ou partie en contournement du rotor de sorption (22) ;
un second organe régulateur de débit (36) dans le flux secondaire (20), de manière à pouvoir réguler le flux d'air secondaire (20) en fonction de la puissance de déshumidification ; et
une régulation du débit volumétrique du ventilateur (12), maintenant sensiblement constante le débit d'air dans le flux principal.

**11.** Installation de conditionnement d'air selon la revendication 10, **caractérisée en ce que** les moyens de régulation sont conçus de manière que le second organe régulateur de débit (36) ferme quand le premier organe régulateur de débit (32) ouvre, et vice versa.

**12.** Installation de conditionnement d'air selon l'une des revendications 10 et 11, **caractérisée en ce que** des moyens filtrants (12) sont montés en amont du ventilateur (12).

**13.** Installation de conditionnement d'air selon les revendications 10 à 12, **caractérisée par :**

un échangeur de chaleur à plaques air-air (40) monté en aval du secteur de déshumidification (24) du côté primaire dans le flux principal (18) et

présentant du côté secondaire une surface hydrophile et des buses (42) destinées à mouiller cette surface avec de l'eau finement dispersée ; et

des moyens permettant de faire passer un flux d'air vicié de l'installation de conditionnement d'air du côté secondaire au-dessus de la surface d'échangeur.

**14.** Installation de conditionnement d'air selon la revendication 13, **caractérisée par** un by-pass régulé (44) permettant de faire passer le flux principal (18) de manière régulée en contournement de l'échangeur de chaleur à plaques (40).

**15.** installation de conditionnement d'air selon la revendication 13 ou 14, **caractérisée par** au moins un échangeur de chaleur (50) monté dans le flux principal (18) en aval de l'échangeur de chaleur à plaques (40).

FIG.1